(19) Europäisches Patentamt / European Patent Office / Office européen des brevets

(11) **EP 2 602 849 B1**

(12) **EUROPEAN PATENT SPECIFICATION**

(45) Date of publication and mention of the grant of the patent:
**01.01.2020 Bulletin 2020/01**

(51) Int Cl.:
*H01M 4/36* (2006.01)   *H01M 4/505* (2010.01)
*H01M 4/525* (2010.01)   *H01M 10/0525* (2010.01)
*H01M 4/04* (2006.01)   *C01G 53/00* (2006.01)
*H01M 4/02* (2006.01)

(21) Application number: **12196102.3**

(22) Date of filing: **07.12.2012**

(54) **Positive active material for lithium secondary battery, method of preparing the same, and lithium secondary battery including positive active material**

Positiv-Aktivmaterial für eine Lithiumsekundärbatterie, Herstellungsverfahren dafür und Lithiumsekundärbatterie mit dem Positiv-Aktivmaterial

Matériaux actif positif pour accumulateur au lithium, son procédé de préparation et accumulateur au lithium l'incorporant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2011 KR 20110130471**

(43) Date of publication of application:
**12.06.2013 Bulletin 2013/24**

(73) Proprietor: **Samsung SDI Co., Ltd.**
**Yongin-si, Gyeonggi-do (KR)**

(72) Inventors:
• **Kim, Min-Han**
**Yongin-si (Gyeonggi-do) (KR)**
• **Park, Do-Hyung**
**Yongin-si (Gyeonggi-do) (KR)**
• **Kim, Ji-Hyun**
**Yongin-si (Gyeonggi-do) (KR)**
• **Lee, Jeong-Seop**
**Yongin-si (Gyeonggi-do) (KR)**
• **Kim, Chang-Hyuk**
**Yongin-si (Gyeonggi-do) (KR)**
• **Kwon, Seon-Young**
**Yongin-si (Gyeonggi-do) (KR)**
• **Kim, Yoon-Chang**
**Yongin-si (Gyeonggi-do) (KR)**

(74) Representative: **Santarelli**
**49, avenue des Champs-Elysées**
**75008 Paris (FR)**

(56) References cited:
**WO-A1-2011/067935**

• **YANG-KOOK SUN ET AL: "High-energy cathode material for long-life and safe lithium batteries", NATURE MATERIALS, vol. 8, no. 4, 22 March 2009 (2009-03-22), pages 320-324, XP055169312, ISSN: 1476-1122, DOI: 10.1038/nmat2418**
• **YANG-KOOK SUN ET AL: "A Novel Cathode Material with a Concentration-Gradient for High-Energy and Safe Lithium-Ion Batteries", ADVANCED FUNCTIONAL MATERIALS, vol. 20, no. 3, 8 February 2010 (2010-02-08), pages 485-491, XP055169817, ISSN: 1616-301X, DOI: 10.1002/adfm.200901730**
• **M-H LEE ET AL: "Synthetic optimization of Li[Ni1/3Co1/3Mn1/3]O2 via co-precipitation", ELECTROCHIMICA ACTA, ELSEVIER SCIENCE PUBLISHERS, BARKING, GB, vol. 50, 1 January 2004 (2004-01-01), pages 939-948, XP002633595, ISSN: 0013-4686, DOI: 10.1016/J.ELECTACTA.2004.07.038 [retrieved on 2004-09-11]**

EP 2 602 849 B1

**Description**

## BACKGROUND OF THE INVENTION

**Field of the Invention**

The present invention relates to a positive active material for a lithium secondary battery, a method of preparing same, and a lithium secondary battery including the positive active material.

**Description of the Related Art**

Representative rechargeable secondary batteries are lead-acid batteries, nickel hydrogen batteries, lithium secondary batteries, and the like. In particular, lithium secondary batteries have no memory effect in which they may lose energy capacity if charged when not fully discharged, have a high energy density per unit weight because Li is the lightest of all metals, have an electromotive force of 3.6 V, which is three times greater than that of nickel-based batteries, and are easily miniaturized. Due to these characteristics, lithium secondary batteries are widely used in mobile products, notebooks, electric tools, and the like, and are also expected to be used in hybrid electric vehicles (HEVs) in the future.

A lithium secondary battery includes a positive electrode, a negative electrode, a separator, and an electrolyte. When the lithium secondary battery is charged, lithium ions are deintercalated from the positive electrode and then move to the negative electrode. On the other hand, when the lithium secondary battery is discharged, lithium ions are deintercalated from the negative electrode and return to the positive electrode. In this regard, the electrodes or the electrolyte do or do not undergo a chemical reaction.

Currently, a lithium cobalt oxide, i.e., $LiCoO_2$ (hereinafter, referred to as "LCO") is used most widely as a positive active material of a lithium secondary battery. However, due to local distribution and scarcity of cobalt resources, manufacturing costs increase and a stable supply of the cobalt resources is difficult to establish. To address these problems, research has been actively conducted for replacing the cobalt material. A nickel-based composite oxide, such as nickel-manganese-cobalt (NMC), is a good candidate as such a material. It overcomes the limitations, such as costs, stability, capacity, and the like, of materials, such as LCO, LNO($LiNiO_2$), or LMO($Li_2MnO_3$). The candidate materials among the NMC materials, have recently been actively searched.

Furthermore, after a battery using a positive active material including a core part and a shell part is pressed, the positive active material usually is partially damaged. As a result, the core part of the positive active material is disadvantageously partially exposed to the electrolytic solution. In this case, the core part and the shell part are defined geometrically as the inside part and the outside part of the positive active material.

Paper "Yang-Kook Sun et al. Nature Materials, Vol. 8, No. 4, 22 March 2009, pp. 320-324" discloses a cathode material for rechargeable lithium batteries. The average composition of the material is $Li[Ni_{0.68}Co_{0.18}Mn_{0.18}]O_2$. The cathode material comprises spherical particles having a core part and a shell part, as well as a surface part. The composition of the core is $Li[Ni_{0.8}Co_{0.1}Mn_{0.1}]O_2$ whereas the composition of the surface is $Li[Ni_{0.46}Co_{0.23}Mn_{0.31}]O_2$.

Paper "Yang-Kook Sun et al. Advanced Functional Materials, Vol. 20, No. 3, 8 February 2010, pp 485-491" discloses a cathode material for rechargeable lithium batteries, which comprises spherical particles having a core part and a shell part. The core does not comprise Manganese. The average composition of the material is $Li[Ni_{0.68}Co_{018}Mn_{0.18}]O_2$.

Paper "M-H Lee et al, Electrochimica Acta, Vol 50, January 2004, pp 939-948" discloses $Li[Ni_{1/3}Co_{1/3}Mn_{1/3}]O_2$ powders which are synthesized from co-precipitated spherical metal hydroxide. The particles of this powder do not have a core and a shell. The paper represents studies on optimum conditions for preparation of said spherical powders via a co-precipitation.

Patent document US 2012/270107 describes a nickel cobalt manganese composite hydroxide. This compound is obtained by a crystallization reaction. The thus obtained nickel cobalt manganese composite hydroxide particles have a small particle diameter and a uniform particle size distribution.

However, at the current time, known nickel-based composite oxides have no demonstrated satisfactory capacity and stability. Thus there is still room for improvement.

## SUMMARY OF THE INVENTION

One object of the present invention is an improved positive active material according to claim 1.

Another object of the present invention is a positive active material for a lithium secondary battery which has a high capacity and packing density, and which is thermally stable.

Still another object of the present invention is a method of preparing the same according to claim 9.

The present invention also concerns a lithium secondary battery including the positive active material, according to claim 12.

The present invention also concerns a precursor of the positive active material, according to claim 13.

Additional aspects will be set forth in part in the description which follows and, in part, will be apparent from the description, or may be learned by practice of the presented embodiments.

According to a first object of the present invention, a positive active material for a lithium secondary battery comprises a core part and a shell part that both comprise a nickel-based composite oxide represented by Formula (1) below:

$$Li_a[Ni_xCo_yMn_z]O_2 \qquad (1)$$

wherein $0.8 \leq a \leq 1.2$, $0.05 \leq x \leq 0.9$, $0.1 \leq y \leq 0.8$, $0.1 \leq z \leq 0.8$, and $x+y+z=1$,
wherein the content of nickel in the core part is larger than the content of nickel in the shell part, characterized in that the content of nickel in the core part is in a range of 60 to 80 mole%, and the content of nickel in the shell part is in a range of 33 to 55 mole%, and in that the core part comprises needle-like particles.
The nickel-based composite oxide of the core part and the nickel-based composite oxide of the shell part may have the same formula (i.e. the same a, x, y and z values) or a different formula (i.e. at least one of a, x, y and z values is different one from the other). The boundary between the core part and the shell part is not always easy to locate, but it is the intermediate space between those parts. In any case, the adhesion strength between the core part and the shell part is increased compared with that of the adhesion strength between the core part and the shell part according to a positive active material of the prior art.

According to a second object of the present invention, a method of preparing a positive active material for a lithium secondary battery comprises:

a first process for mixing a first precursor solution comprising a nickel salt, a cobalt salt, and a manganese salt, at a molar ratio of x:y:z satisfying $0.05 \leq x \leq 0.9$, $0.1 \leq y \leq 0.8$, $0.1 \leq z \leq 0.8$, and a first base, to prepare a first mixture and inducing a reaction in the first mixture to obtain a precipitate;
a second process for adding to the precipitate a second precursor solution comprising a nickel salt, a cobalt salt, and a manganese salt, at a molar ratio of x':y':z' satisfying $0.05 \leq x' \leq 0.9$, $0.1 \leq y' \leq 0.8$, $0.1 \leq z' \leq 0.8$, and $x'+y'+z'=1$, and a second base, to obtain a second mixture and inducing a reaction in the second mixture to obtain a composite metal hydroxide; and
mixing the composite metal hydroxide with a lithium salt and heat treating the mixed composite metal hydroxide to prepare the positive active material according to the invention, wherein the content of nickel in the first precursor solution is adjusted to be larger than the content of nickel in the second precursor solution, wherein the reaction time of the second mixture in the second process is adjusted to be longer than the reaction time of the first mixture in the first process, and wherein a pH of the first mixture in the first process is adjusted to be in a range of 10 to 11, and a pH of the second mixture in the second process is adjusted to be in a range of 11.5 to 12.0.

According to a third object of the present invention, a lithium secondary battery includes a positive electrode, a negative electrode, a separator and an electrolyte, wherein the positive electrode comprises the positive active material according to the invention.

According to a fourth object of the present invention, a positive active material precursor for the positive active material according to the invention comprises
a nickel-based composite hydroxide represented by Formula (2) below:

$$NixCoyMnz(OH)_2 \qquad (2)$$

wherein $0.05 \leq x \leq 0.9$, $0.1 \leq y \leq 0.8$, $0.1 \leq z \leq 0.8$, and $x+y+z=1$,
preferably $Ni_{0.6}Co_{0.2}Mn_{0.2}(OH)_2$ or $Ni_{1/3}Co_{1/3}Mn_{1/3}(OH)_2$.

The core part precursor has preferably, according to a preferred embodiment of the invention, open pores and a curved surface structure.

## BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:

FIG. 1 is a schematic cross-sectional view of a positive active material of a lithium secondary battery according to an embodiment according to the invention;

FIG. 2 is a schematic diagram illustrating a structure of a lithium secondary battery as according to an embodiment according to the invention;

FIGS. 3 and 4 are scanning electron microscopic (SEM) images of a core precursor and FIG. 5 is a SEM image of a core-shell precursor prepared according to the invention (Preparation Example 1);

FIG. 6 is a graph showing differential scanning calorimetry results of the respective positive active materials a, b and c prepared respectively according to Preparation Example 1, Comparative Preparation Example 1, and Comparative Preparation Example 2; and

FIG. 7 is a flow chart illustrating a method of preparing a positive active material for a lithium secondary battery according to an embodiment according to the invention.

## DETAILED DESCRIPTION OF THE INVENTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the Figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

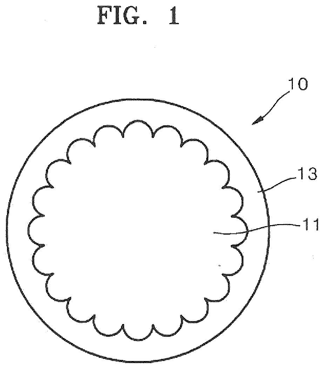

FIG 1. is a schematic cross-sectional view of a positive active material 10 of a lithium secondary battery which is substantially spherical, according to an embodiment according to the invention. Referring to FIG. 1, the positive active material 10 of a lithium secondary battery has a two-layered structure consisting of a core part 11 and a shell part 13.

Although not illustrated in FIG. 1, the core part comprises, preferably is constituted by, "needle-like particles". The shell part of the positive active material may also comprise, preferably is constituted by, needle-like particles. The presence of the needle-like particles may be confirmed by a scanning electron microscope. "Core part" means an internal part, not in contact with the outside of the positive active material. "Shell part" means an external part, in contact with the outside of the positive active material. "Needle-like" particles mean particles having a substantially needle-shape or the like.

Referring to FIG. 1, the core part 11 may have a curved surface or a non-curved surface. *"Curved surface"* means a non-flat surface, i.e. a surface comprising at least one non-flat portion.

As illustrated in FIG. 1, the shell part 13 covers the core part 11. The entire external surface of the core part 11 is in contact with an internal surface of the shell part 13.

The core part 11 and the shell part 13 both include a nickel-based composite oxide represented by Formula (1) below:

$$Li_a[Ni_xCo_yMn_z]O_2 \qquad (1)$$

wherein $0.8 \le a \le 1.2$, $0.05 \le x \le 0.9$, $0.1 \le y \le 0.8$, $0.1 \le z \le 0.8$, and $x+y+z=1$.

The amounts of the core part 11 and the shell part 13 may be in the range of approximately 40 to 90 parts by weight, based on 100 parts by weight of the positive active material 10, and approximately 10 to 60 parts by weight, based on 100 parts by weight of the positive active material 10.

According to the invention, the core part 11 includes a larger amount of nickel than the shell part 13. The amount of nickel in the core part 11 may be in a range of approximately 50 to 90 mole%, preferably in a range of approximately 60 to 90 mole%, and the amount of nickel in the shell part 13 may be in the range of approximately 5 to 49 mole%. In the characterization of the invention, the amount of nickel in the core part 11 is in the range of approximately 60 to 80 mole%, and the amount of nickel in the shell part 13 is in the range of approximately 33 to 55 mole%.

The core part 11 of the positive active material 10 that contains a relatively large amount of nickel may contribute to an increase in the capacity of a lithium secondary battery, and the shell part 13 of the positive active material 10 that contains a relatively low amount of nickel may contribute to an increase in the stability of a lithium secondary battery. Since the shell part 13 in contact with an electrolyte has a small amount of nickel, deterioration of thermal stability, which is caused by a reaction between the shell part 13 and the electrolytic solution, may be advantageously prevented.

The core part 11 has preferably a porous structure with open pores. This means that the structure is porous and that the pores are in contact with the external surface of the core part. This leads to an increase of the contact area between the core part 11 and the shell part 13 during the manufacture of the positive active material, whereby the core part 11 and the shell part 13 are not completely disconnected as explained below (paragraph [0037]). The increase of contact area between the core part 11 and the shell part 13 and the existence of the core part 11 that has a surface closer to a surface of active particles may more largely contribute to an increase in the capacity of a lithium secondary battery, as compared to conventional active particles in which a core part is completely disconnected from a shell part.

In a preferred embodiment, the core part 11 may have open pores and/or a curved surface structure, more preferably open pores and a curved surface structure. In this case, the precursor of the core part 11 has preferably open pores and a curved surface structure.

In one embodiment, the shell part 13 may have portions that permeate into the open pores of the core part 11.

A positive active material precursor of the positive active material, according to this embodiment includes a nickel-based composite hydroxide represented by Formula (2) below:

$$Ni_xCo_yMn_zOH \qquad (2)$$

wherein $0.05 \leq x \leq 0.9$, $0.1 \leq y \leq 0.8$, $0.1 \leq z \leq 0.8$, and $x+y+z=1$.

The positive active material precursor may be a precursor of the core part 11.

The term "open pore" used herein refers to a pore structure in contact with the outside. Thus, when a shell part is formed on the porous core part with open pores, the inside of the core part constituted of the pores may be filled partially or completely by the shell part. In this case, the shell part permeates into the open pores of the core part, through an intermediate space constituting the boundary between the shell part and the core part.

The diameter of the core part 11 is in the range of approximately 1 $\mu$m to 10 $\mu$m, and the diameter of the shell part 13 is in the range of approximately 5 $\mu$m to 20 $\mu$m. "About 1" means the value of "1" and values around 1 (excluding 1).

When the diameters of the core part 11 and the shell part 13 are within the ranges described above, the positive active material has generally excellent capacity characteristics. That is, a positive active material with high capacity and stability may be obtained.

In a preferred embodiment, the core part 11 may include $LiNi_{0.6}Co_{0.2}Mn_{0.2}O_2$, and the shell part 13 may include $LiNi_{1/3}Co_{1/3}Mn_{1/3}O_2$.

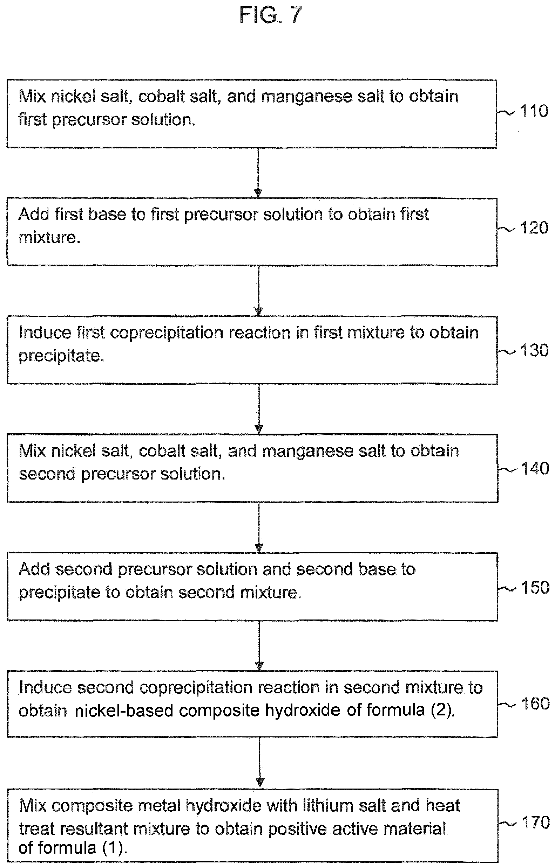

According to another object of the present invention, there is provided a method of preparing the positive active material for a lithium secondary battery. FIG. 7 is a flow chart illustrating a method of preparing a positive active material for a lithium secondary battery according to an embodiment according to the invention.

The positive active material may be prepared by coprecipitation. The coprecipitation is a method whereby at least two types of elements or compounds are co-precipitated using a precipitation reaction in an aqueous solution, thereby preparing powder.

To obtain the nickel-based composite hydroxide of Formula (2), a nickel salt, a cobalt salt, and a manganese salt are mixed respectively at a molar ratio of x:y:z satisfying $0.05 \leq x \leq 0.9$, $0.1 \leq y \leq 0.8$, $0.1 \leq z \leq 0.8$, and $x+y+z=1$ to prepare a first precursor solution (step 110). A first base is added to the first precursor solution and mixed together to obtain a first mixture (step 120).

While the pH of the first mixture is maintained basic, a first coprecipitation reaction in the first mixture is induced to co-precipitate nickel ions, cobalt ions, and manganese ions. As a result, a precipitate is obtained as a core part precursor (step 130).

The pH of the first mixture is preferably adjusted to be approximately in a range of about 10 to about 11. The reaction of the first mixture is generally performed at a temperature ranging from about 25 to about 35 °C. In addition, a flow rate of $N_2$ is generally maintained at approximately 1 LPM (Liter per Minute). Furthermore, the average reaction time is generally adjusted to be approximately in the range of about 5 to about 7 hours. Thus, the precipitate according to the first mixture is preferably obtained at a pH in the range of about 10 to about 11, at a temperature ranging from about 25 to about 35°C, and an average reaction time in the range of about 5 to about 7 hours.

In the first mixture, the first base is usually added so as to adjust the pH of the first mixture within the range described above.

The precipitate generally includes a nickel-based composite hydroxide represented by Formula (2) above, and may be used as a positive active material precursor for the core part of a lithium secondary battery which comprises, preferably is constituted by, needle-like particles.

Due to the presence of needle-like particles, this core part of a positive active material precursor generally has advantageously open pores and a curved surface structure. Thus, the core part of the positive active material issued from the precursor generally has advantageously porous property and a high specific surface area.

For example, the positive active material precursor of Formula (2) may be $Ni_{0.6}Co_{0.2}Mn_{0.2}OH$ or $Ni_{1/3}Co_{1/3}Mn_{1/3}OH$.

A second precursor solution including a nickel salt, a cobalt salt, and a manganese salt (step 140), and a second base, are added to the precipitate, thereby obtaining a second mixture (step 150). The nickel salt, the cobalt salt, and the manganese salt are mixed, respectively at a molar ratio of x':y':z' satisfying $0.05 \leq x' \leq 0.9$, $0.1 \leq y' \leq 0.8$, $0.1 \leq z' \leq 0.8$, and $x'+y'+z'=1$ so as to obtain the nickel-based composite hydroxide of Formula (2). Preferably x=x', y=y' and z=z'.

The pH of the second mixture is maintained basic and a second coprecipitation reaction in the second mixture is induced to obtain a nickel-based composite hydroxide of formula (2) as a shell part precursor (step 160).

The pH of the second mixture is preferably adjusted to be approximately in the range of about 11.5 to about 12.0. The reaction of the second mixture is generally performed at a temperature ranging from about 35 to about 50 °C. In addition, a flow rate of $N_2$ is generally maintained at approximately 3 LPM. Furthermore, the average reaction time is generally adjusted to be approximately in the range of about 6 to about 10 hours. Thus, the nickel-based composite hydroxide according to the record mixture is preferably at a pH in the range of about 11.5 to about 12.0, at a temperature ranging from 35 to 50°C, and according to an average reaction time in the range of about 6 to about 10 hours.

In the second mixture, the second base is usually added so as to adjust the pH of the second mixture within the range described above.

When the pH and reaction time of the first and second mixtures are within the ranges described above, a positive active material with a desired particle diameter and structure according to the invention may be obtained.

The composite metal hydroxide is mixed with a lithium salt and the resultant mixture is heat treated to prepare a positive active material of formula (1) (step 170). The applicant has noted that advantageously after a battery using the positive active natural material including a core part and a shell part according to the invention is pressed, the extent of the damage which can occur to the positive active material is significantly reduced with respect to the positive active material of the prior art.

The heat treatment process is usually performed at a temperature ranging from about 800 about 1,000 °C, generally in an air or oxidizing atmosphere.

The nickel salt may be a nickel sulfate, a nickel nitrate, a nickel acetate, a nickel halide, a nickel hydroxide, and/or a nickel oxyhydroxide. The cobalt salt may be a cobalt sulfate, a cobalt nitrate, a cobalt acetate, a cobalt halide, a cobalt hydroxide, and/or a cobalt oxyhydroxide. The manganese salt may be a manganese sulfate, a manganese nitrate, a manganese acetate, a manganese halide, a manganese hydroxide, and/or a manganese oxyhydroxide.

If the nickel salt, the cobalt salt, and the manganese salt are used in a solution, the molar ratio of the solution may be in the range of about 5M (mol/L) to about 7M.

For example, an aqueous solution of the first base may have a concentration in the range of about 10 to about 14M, and an aqueous solution of the second base may have a concentration in the range of about 6 to about 12M.

When a first precursor solution and a second precursor solution are prepared using the nickel salt, the cobalt salt, and the manganese salt, distilled water may be used as a solvent.

The lithium salt may be lithium carbonate ($Li_2CO_3$).

The base for the pH adjustment may be sodium hydroxide (NaOH), potassium hydroxide (KOH), lithium hydroxide (LiOH), and/or aqueous solutions thereof.

In the preparation process described above, the reaction time of the second mixture used to obtain a nickel-based composite hydroxide is longer than the reaction time of the first mixture. For example, the reaction time of the first mixture may be in the range of about 5 to about 7 hours, for example approximately 6 hours, and the reaction time of the second mixture may be in the range of about 6 to about 10 hours, for example approximately 10 hours. When the reaction time of the second mixture is longer than the reaction time of the first mixture, it is believed that a positive active material with desired core and shell parts may be obtained.

The injection rates of the second precursor solution and the second base are generally lower when carrying out step (150) than the injection rates of the first precursor solution and the first base when carrying out step (120).

For example, the injection rate of the first precursor solution may be in the range of about 600 to about 1,200 mL/h, and the injection rate of the first base may be in the range of about 400 to 800 mL/h.

For example, the injection rate of the second precursor solution may be in the range of about 300 to about 599 mL/h, and the injection rate of the second base may be in the range of about 200 to about 390 mL/h.

In the preparation process described above, the amounts of the nickel salt, the cobalt salt, and the manganese salt are preferably stoichiometrically used in both steps (110) and (140), so as to obtain the nickel-based composite oxide of Formula (1).

For example, in the preparation process (steps (110), (120) and (130)) of the precipitate, the amount of the nickel salt (in step (110) is usually in the range of about 1 to 1.2 moles), for example 1.1 moles, based on 1 mole of the cobalt salt, and the amount of the manganese salt is usually in the range of about 1 to 1.2 moles, for example 1 mole, based on 1 mole of the cobalt salt.

In the preparation process of the nickel-based composite hydroxide (cf. formula (2) (steps (140), (150) and (160)), the amount of the nickel salt is usually in the range of about 1 to about 1.2 moles, based on 1 mole of the cobalt salt, and the amount of the manganese salt is usually in the range of about 1 to about 1.2 moles, based on 1 mole of the cobalt salt.

Detailed adjustment of reaction conditions in the aforementioned coprecipitation is known in the art, and thus, a detailed description thereof is not provided herein.

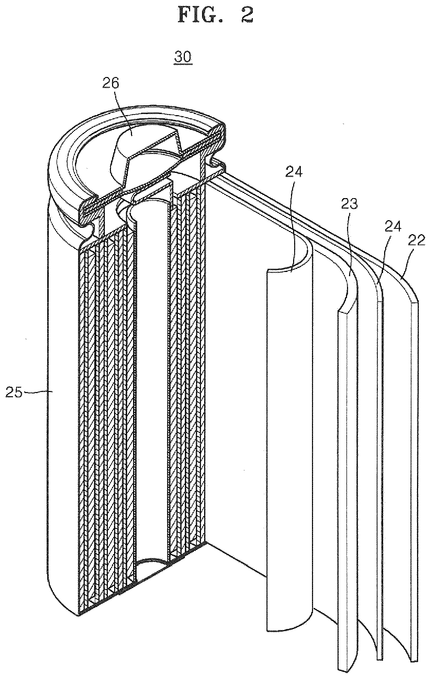

FIG. 2 is a schematic diagram illustrating a structure of a lithium secondary battery 30 according to an embodiment according to the invention. Referring to FIG. 2, the lithium secondary battery 30 mainly includes a positive electrode 23, a negative electrode 22, a separator 24 interposed between the positive electrode 23 and the negative electrode 22, an electrolyte (not shown) of which the positive electrode 23, the negative electrode 22, and the separator 24 are impregnated, a battery case 25, and a sealing member 26 that seals the battery case 25. The lithium secondary battery 30 may be configured such that the positive electrode 23, the negative electrode 22, and the separator 24 are sequentially stacked, wound in a spiral form, and accommodated in the battery case 25. In this regard, the positive active material of the positive electrode 23 is the positive active material having a two-layered structure as described with reference to FIG. 1.

One or more embodiments of the present invention will now be described in greater detail with reference to the following examples. However, these examples are for illustrative purposes only and are not intended to limit the scope of the invention, which is defined by the appended claims.

Preparation Example 1: Preparation of positive active material

$Li_2CO_3$ was used as a Li salt, $NiSO_4$-$H_2O$ was used as a Ni salt, $CoSO_4$-$H_2O$ was used as a Co salt, and $MnSO_4$-$H_2O$ was used as a Mn salt.

In this regard, preparation processes for forming a hydroxide by coprecipitation were performed on the Ni sulfate, the Co sulfate, and the Mn sulfate. 0.6 moles of the Ni sulfate, 0.2 moles of the Co sulfate, and 0.2 moles of the Mn sulfate were dissolved in distilled water to obtain 2.5M of a first precursor solution. The first precursor solution was mixed with 4-8M of an aqueous sodium hydroxide solution and ammonia water at appropriate amounts, and the resultant mixture was stirred at 600 rpm in a thermostat at 25 to 35 °C to obtain a precipitate. In the coprecipitation reaction, pH was maintained in the range of 10-11, and the average reaction time of the resultant solution in the thermostat was adjusted to be about 5 to 7 hours. An injection rate of the first precursor solution was in the range of about 600 to about 1,200 mL/h, and injection rates of the aqueous sodium hydroxide solution and the ammonia water were in the range of about 400 to about 800 mL/h. In addition, a flow rate of $N_2$ was maintained at 1 LPM.

To the precipitate was added 2.5M of a second precursor solution obtained by dissolving 0.33 moles of the Ni sulfate, 0.33 moles of the Co sulfate, and 0.33 moles of the Mn sulfate in distilled water, and the resultant solution was mixed with 4-8M of an aqueous sodium hydroxide solution and ammonia water at appropriate amounts and then stirred at 600 rpm in a thermostat at 35 to 50 °C.

In the coprecipitation reaction, pH was maintained in the range of 11.5 to 12.0, and an average reaction time of the resultant solution in the thermostat was adjusted to be about 8 to 10 hours. An injection rate of the second precursor solution was in the range of about 300 to about 599 mL/h, and injection rates of the aqueous sodium hydroxide solution and the ammonia water were in the range of about 200 to about 390 mL/h. In addition, a flow rate of $N_2$ was maintained at 3 LPM.

The resultant coprecipitate, i.e., a nickel-based composite hydroxide, was washed, dried, and then mixed with $Li_2CO_3$ at a molar ratio of 1:1, and the resultant mixture was heated up to 800 to 1,000 °C at a heating rate of 1-5 °C/min in an air atmosphere and then heat treated at 800 to 1,000 °C for 5 to 20 hours. As a result, a positive active material comprising a core part formed of $LiNi_{0.6}Co_{0.2}Mn_{0.2}O_2$ and a shell part formed of $LiNi_{1/3}Co_{1/3}Mn_{1/3}O_2$, and comprising needle-like particles, was obtained.

Comparative Preparation Example 1: Preparation of positive active material

$Li_2CO_3$ was used as a Li salt, $NiSO_4$-$H_2O$ was used as a Ni salt, $CoSO_4$-$H_2O$ was used as a Co salt, and $MnSO_4$-$H_2O$ was used as a Mn salt. In this regard, preparation processes for forming a hydroxide by coprecipitation were performed on the Ni sulfate, the Co sulfate, and the Mn sulfate. 0.6 moles of the Ni sulfate, 0.2 moles of the Co sulfate, and 0.2 moles of the Mn sulfate were dissolved in distilled water to obtain 2.5M of a precursor solution. The precursor solution was mixed with 4-8M of an aqueous sodium hydroxide solution and ammonia water at appropriate amounts, and the resultant mixture was stirred at 600 rpm in a thermostat at 45 °C.

In the coprecipitation reaction, pH was maintained in the range of 11 to 12, and the average reaction time of the resultant solution in the thermostat was adjusted to be 4 to 10 hours. The resultant coprecipitate was washed, dried, and then mixed with $Li_2CO_3$ at a molar ratio of 1:1, and the resultant mixture was heated up to 800 to 1,000 °C at a heating rate of 1-5 °C/min in an air atmosphere and then heat treated at 800 to 1,000 °C for 5 to 20 hours to obtain $LiNi_{0.6}Co_{0.2}Mn_{0.2}O_2$.

Comparative Preparation Example 2: Preparation of positive active material

$Li_2CO_3$ was used as a Li salt, $NiSO_4$-$H_2O$ was used as a Ni salt, $CoSO_4$-$H_2O$ was used as a Co salt, and $MnSO_4$-$H_2O$ was used as a Mn salt. In this regard, preparation processes for forming a hydroxide by coprecipitation were performed on the Ni sulfate, the Co sulfate, and the Mn sulfate.

0.33 moles of a Ni sulfate, 0.33 moles of a Co sulfate, and 0.33 moles of an Mn sulfate were dissolved in distilled water to obtain 2.5M of a precursor solution, the precursor solution was mixed with 4-8M of an aqueous sodium hydroxide solution and ammonia water at appropriate amounts, and the resultant mixture was stirred at 600 rpm in a thermostat at 45 °C. In the coprecipitation reaction, pH was maintained in the range of 11 to 12, and an average reaction time of the resultant solution in the thermostat was adjusted to be 4 to 10 hours. The resultant coprecipitate was washed, dried, and then mixed with $Li_2CO_3$ at a molar ratio of 1:1, and the resultant mixture was heated up to 800 to 1,000 °C at a heating rate of 1-5 °C/min in an air atmosphere and then heat treated at 800 to 1,000 °C for 5 to 20 hours to obtain $LiNi_{1/3}Co_{1/3}Mn_{1/3}O_2$.

Example 1: Manufacture of lithium secondary battery

5.0 g of the positive active material prepared according to Preparation Example 1, 0.15 g of polyvinylidene fluoride, and 0.15 g of a carbon were dispersed in 2.5 g of N-methylpyrrolidone to prepare a positive electrode-forming composition.

The positive electrode-forming composition was coated on an aluminum (Al) foil to a thickness of 60 $\mu$m to form a thin plate, and the thin plate was dried at 135 °C for 3 hours or longer and pressed, thereby completing the preparation of a positive electrode.

Separately, a negative electrode was prepared as follows.

A carbonaceous negative active material and polyvinylidene fluoride as a binder were mixed at a weight ratio of 96:4 in N-methylpyrrolidone as a solvent to prepare a negative electrode slurry. The negative electrode slurry was coated on a Cu foil to thickness of 14 $\mu$m to form a thin plate, and the thin plate was dried at 135 °C for 3 hours or longer and pressed, thereby completing the preparation of a negative electrode.

An electrolyte was prepared by adding 1.3M $LiPF_6$ to a mixed solvent obtained by mixing ethylene carbonate (EC), ethyl methyl carbonate (EMC), and dimethyl carbonate (DMC) at a volume ratio of 1:1:1.

**A** separator consisting of a porous polyethylene (PE) film was interposed between the positive and negative electrodes prepared as above to form a battery assembly, the battery assembly was wound, pressed, and accommodated in a battery case, and the electrolyte was injected into the battery case, thereby completing the manufacture of a lithium secondary battery having a capacity of 2,600 mAh.

Comparative Example 1: Manufacture of lithium secondary battery

A lithium secondary battery was manufactured in the same manner as in Example 1, except that the positive active material prepared according to Comparative Preparation Example 1 was used instead of the positive active material prepared according to Preparation Example 1.

Comparative Example 2: Manufacture of lithium secondary battery

A lithium secondary battery was manufactured in the same manner as in Example 1, except that the positive active material prepared according to Comparative Preparation Example 2 was used instead of the positive active material of Preparation Example 1.

Evaluation Example 1: Inductively coupled plasma (ICP) analysis

ICP analysis (excluding Li and O) was performed on the positive active materials of Preparation Example 1 and Comparative Preparation Example 1, and the results are shown in Table 1 below.

<Table 1>

|  | Nickel (Ni) (atomic %) | Cobalt (Co) (atomic %) | Manganese (Mn) (atomic %) |
|---|---|---|---|
| Preparation Example 1 | 50.2 | 24.9 | 24.8 |
| Comparative Preparation Example 1 | 60.1 | 20.0 | 19.9 |

Evaluation Example 2: Scanning electron microscope (SEM) analysis

In Preparation Example 1, the first coprecipitation reaction was performed using 2.5M of the first precursor solution for about 6 hours and the obtained resultant was washed and dried, thereby obtaining a core part precursor as a precipitate.

In addition, in Preparation Example 1, the second coprecipitation reaction was performed using 2.5M of the second precursor solution for about 10 hours and the obtained resultant was washed and dried, thereby obtaining a core part-shell part precursor as a nickel-based composite hydroxide.

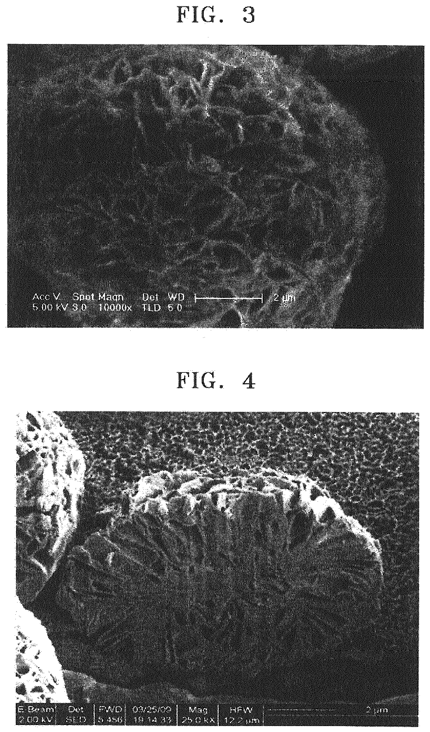

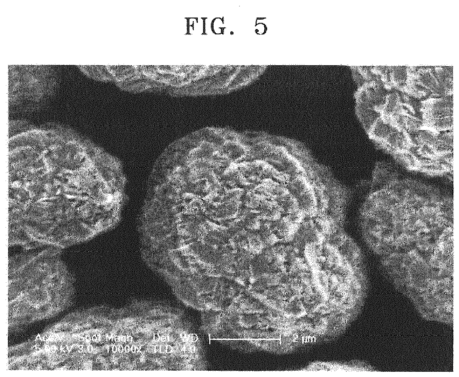

SEM analysis was performed on the core part precursor and the precursor of a core part-shell part precursor of Preparation Example 1 according to the invention, and the results are illustrated in FIGS. 3 through 5. FIGS. 3 and 4 respectively illustrate SEM images showing a surface and a cross-section of the core part precursor, and FIG. 5 illustrates a SEM image showing a surface of the core part-shell part precursor.

As illustrated in FIGS. 3 and 4, it was confirmed that the core part precursor had open pores and a curved surface structure. As illustrated in FIG. 5, it was confirmed that the precursor of a core part-shell part composite was configured such that the open pores of the core part precursor illustrated in FIGS. 3 and 4 were filled during the formation of the shell part.

Evaluation Example 3: Thermal stability

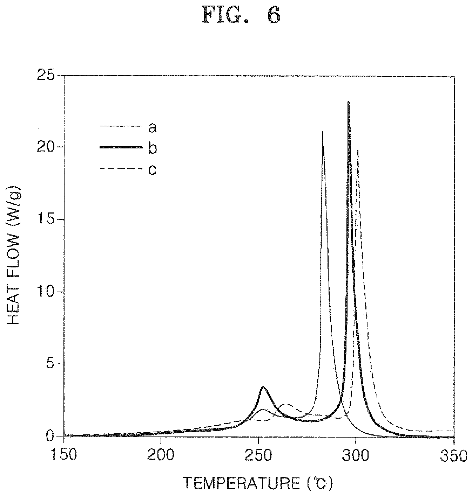

A thermal stability of the positive active material of Preparation Example 1 was measured using differential scanning calorimetry (DSC), and the results are illustrated in FIG. 6.

To evaluate the thermal stability of the positive active material of Preparation Example 1, FIG. 6 also illustrates DSC graphs showing thermal stabilities of the positive active materials of Comparative Preparation Examples 1 and 2. In FIG. 6, a denotes the positive active material of Comparative Preparation Example 1, b denotes the positive active material of Preparation Example 1, and c denotes the positive active material of Comparative Preparation Example 2.

As illustrated in FIG. 6, it was confirmed that the positive active material of Preparation Example 1 had a higher thermal stability than the thermal stability of the positive active material of Comparative Preparation Example 1, and had a high thermal stability similar to the thermal stability of the positive active material of Comparative Preparation Example 2.

Evaluation Example 4: Charge and discharge characteristics

The lithium secondary batteries manufactured according to Example 1 and Comparative Examples 1 and 2 were charged at a constant current of 16 mA/g until the voltage of the lithium secondary batteries reached 4.3 V (vs. Li). After the voltage reached 4.3 V, each lithium secondary battery was charged at a constant voltage of 4.3 V until the constant current value decreased to a tenth. Afterwards, each lithium secondary battery was discharged at a constant current of 16 mA/g (0.1 C rate) until the voltage of the battery reached 3 V (vs. Li), and the discharge capacity thereof was measured.

In a $2^{nd}$ cycle, each lithium secondary battery was charged at a constant current of 32 mA/g and a constant voltage of 4.3 V until the voltage of the battery reached 4.3 V (vs. Li). Thereafter, the lithium secondary battery was discharged at a constant current of 32 mA/g (0.2 C rate) until the voltage of the battery reached 3 V (vs. Li).

In a $3^{rd}$ cycle, each lithium secondary battery was charged at a constant current of 80 mA/g until the voltage of the lithium secondary battery reached 4.3 V (vs. Li). Thereafter, the lithium secondary battery was discharged at a constant current of 80 mA/g (0.5 C rate) until the voltage of the lithium secondary battery reached 3 V (vs. Li).

In a $4^{th}$ cycle, each lithium secondary battery was charged at a constant current of 160 mA/g until the voltage of the lithium secondary battery reached 4.3 V (vs. Li). Thereafter, the lithium secondary battery was discharged at a constant current of 160 mA/g (1 C rate) until the voltage of the lithium secondary battery reached 3 V (vs. Li).

The charge/discharge test was performed at 25 °C.

The measurement results are shown in Table 2 below. An initial coulombic efficiency is represented by Equation 1 below. High-rate discharge characteristics are represented by a rate capability (1C/0.1C) of Equation 2 below:

$$\text{Initial coulombic efficiency [\%]} = [\text{discharge capacity in 1st cycle/charge capacity in 1st cycle}] \times 100 \quad \text{Equation (1)}$$

$$\text{Rate capability [\%]} = [\text{discharge capacity at 1 C rate (4th cycle)/discharge capacity at 0.1 C rate (1st cycle)}] \times 100 \quad \text{Equation (2)}$$

<Table 2>

|  | Charge at 0.1 C (mAh/g) | Discharge at 0.1 C (mAh/g) | Efficiency [%] | Initial coulombic efficiency | Rate capability [%] |
|---|---|---|---|---|---|
| Example 1 | 198.5 | 178.8 | 90.1 | 91.5 | 83.6 |
| Comparative Example 2 | 181.4 | 161.4 | 88.9 | 91.3 | 81.9 |
| Comparative Example 1 | 200.1 | 181.0 | 90.5 | 91.5 | 82.9 |

As shown in Table 2, the lithium secondary battery of Example 1 has higher initial coulombic efficiency and high rate characteristics (rate capability) than those of the lithium secondary batteries of Comparative Examples 1 and 2.

As a conclusion, the positive active material for a lithium secondary battery according to the invention, consists of a nickel-based composite oxide and has a two layered-structure, an inner part which has a large amount of nickel and an outer part which has a small amount of nickel. A lithium secondary battery including this positive active material has high capacity and improved stability.

It should be understood that the exemplary embodiments described therein should be considered in a descriptive sense only and not for purposes of limitation. The invention is defined by the appended claims.

**Claims**

1. A positive active material for a lithium secondary battery, the positive active material comprising:
   a core part and a shell part that both comprise a nickel-based composite oxide represented by Formula (1) below:

   $$Li_a[Ni_xCo_yMn_z]O_2 \qquad (1)$$

   where $0.8 \leq a \leq 1.2$, $0.05 \leq x \leq 0.9$, $0.1 \leq y \leq 0.8$, $0.1 \leq z \leq 0.8$, and $x+y+z=1$,
   wherein the content of nickel in the core part is larger than the content of nickel in the shell part,
   wherein the content of nickel in the core part is in a range of 60 to 80 mole% with respect to the sum of Ni, Co, and Mn, and the content of nickel in the shell part is in a range of 33 to 55 mole% with respect to the sum of Ni, Co, and Mn, and
   the core part comprises substantially needle-shape particles wherein a diameter of the core part is in a range of 1 to 10 $\mu$m, and **characterized in that** a diameter of the shell part is in a range of 5 to 20 $\mu$m.

2. The positive active material according to claim 1, wherein the core part has a porous structure with open pores.

3. The positive active material according to claim 2, wherein the shell part permeates into open pores of the core part.

4. The positive active material according to any one of claims 1 to 3, wherein the core part has a curved surface structure.

5. The positive active material according to any one of claims 1 to 4, wherein an amount of the core part is in a range of 40 to 90 parts by weight, based on 100 parts by weight of the positive active material, and an amount of the shell part is in a range of 10 to 60 parts by weight, based on 100 parts by weight of the positive active material.

6. The positive active material according to any one of claims 1 to 5, wherein the core part comprises $LiNi_{0.6}Co_{0.2}Mn_{0.2}O_2$, and the shell part comprises $LiNi_{1/3}Co_{1/3}Mn_{1/3}O_2$.

7. The positive active material according to any one of claims 1 to 6, wherein a content of nickel in the shell part is in a range of 33 to 49 mole% with respect to the sum of Ni, Co, and Mn.

8. The positive active material according to any one of claims 1 to 7, wherein the core part and the shell part are substantially spherical.

9. A method of preparing a positive active material for a lithium secondary battery, the method comprising:

a first process for mixing a first precursor solution comprising a nickel salt, a cobalt salt, and a manganese salt, at a molar ratio of x:y:z satisfying $0.05 \leq x \leq 0.9$, $0.1 \leq y \leq 0.8$, $0.1 \leq z \leq 0.8$, and a first base, to prepare a first mixture and inducing a reaction in the first mixture to obtain a precipitate;

a second process for adding to the precipitate a second precursor solution comprising a nickel salt, a cobalt salt, and a manganese salt, at a molar ratio of x':y':z' satisfying $0.05 \leq x' \leq 0.9$, $0.1 \leq y' \leq 0.8$, $0.1 \leq z' \leq 0.8$, and $x'+y'+z'=1$, and a second base, to obtain a second mixture and inducing a reaction in the second mixture to obtain a nickel-based composite hydroxide; and

mixing the composite metal hydroxide with a lithium salt and heat treating the mixed composite metal hydroxide to prepare the positive active material according to any one of claims 1 to 8,

wherein the content of nickel in the first precursor solution is adjusted to be larger than the content of the second precursor solution,

wherein the reaction time of the second mixture in the second process is adjusted to be longer than the reaction time of the first mixture in the first process, and

wherein a pH of the first mixture in the first process is adjusted to be in a range of 10 to 11, and a pH of the second mixture in the second process is adjusted to be in a range of 11.5 to 12.0.

10. The method according to claim 9, wherein a reaction time of the first mixture in the first process is in a range of 5 to 7 hours, and a reaction time of the second mixture in the second process is in a range of 8 to 10 hours.

11. The method according to any one of claims 9 to 10, wherein an amount of the nickel salt in the first process is in a range of 1 to 1.2 moles based on 1 mole of the cobalt salt.

12. A lithium secondary battery (30) comprising a positive electrode (23), a negative electrode (22), a separator (24) and an electrolyte, wherein the positive electrode (23) comprises the positive active material according to any one of claims 1 to 8.

13. A positive active material precursor for the positive active material according to any one of claims 1 to 8, the positive active material precursor comprising:
a nickel-based composite hydroxide represented by Formula (2) below

$$Ni_xCoyMn_z(OH)_2 \qquad (2)$$

wherein $0.05 \leq x \leq 0.9$, $0.1 \leq y \leq 0.8$, $0.1 \leq z \leq 0.8$, and $x+y+z=1$,
preferably $Ni_{0.6}Co_{0.2}Mn_{0.2}(OH)_2$ or $Ni_{1/3}Co_{1/3}Mn_{1/3}(OH)_2$.

## Patentansprüche

1. Positives Aktivmaterial für eine Lithiumsekundärbatterie, wobei das positive Aktivmaterial umfasst:
einen Kernteil und einen Ummantelungsteil, die beide ein Kompositoxid auf Nickelbasis umfassen, dargestellt durch die unten stehende Formel (1):

$$Li_a[Ni_xCo_yMn_z]O_2 \qquad (1)$$

wo $0.8 \leq a \leq 1.2$, $0.05 \leq x \leq 0.9$, $0.1 \leq y \leq 0.8$, $0.1 \leq z \leq 0.8$ und $x+y+z=1$,
wobei der Nickelgehalt in dem Kernteil größer als der Nickelgehalt in dem Ummantelungsteil ist,
wobei der Nickelgehalt in dem Kernteil in einem Bereich von 60 bis 80 Mol-% bezüglich der Summe aus Ni, Co und Mn liegt und der Nickelgehalt in dem Ummantelungsteil in einem Bereich von 33 bis 55 Mol-% bezüglich der Summe aus Ni, Co und Mn liegt und
der Kernteil im Wesentlichen nadelförmige Teilchen umfasst, wobei ein Durchmesser des Kernteiles in einem Bereich von 1 bis 10 $\mu$m liegt, und **dadurch gekennzeichnet, dass** ein Durchmesser des Ummantelungsteiles in einem Bereich von 5 bis 20 $\mu$m liegt.

2. Positives Aktivmaterial nach Anspruch 1, wobei der Kernteil eine poröse Struktur mit offenen Poren aufweist.

3. Positives Aktivmaterial nach Anspruch 2, wobei der Ummantelungsteil in offene Poren des Kernteiles eindringt.

4. Positives Aktivmaterial nach einem der Ansprüche 1 bis 3, wobei der Kernteil eine gekrümmte Oberflächenstruktur aufweist.

5. Positives Aktivmaterial nach einem der Ansprüche 1 bis 4, wobei eine Menge des Kernteiles in einem Bereich von 40 bis 90 Gewichtsanteilen, auf der Grundlage von 100 Gewichtsanteilen des positiven Aktivmaterials, liegt und eine Menge des Ummantelungsteiles in einem Bereich von 10 bis 60 Gewichtsanteilen, auf der Grundlage von 100 Gewichtsanteilen des positiven Aktivmaterials, liegt.

6. Positives Aktivmaterial nach einem der Ansprüche 1 bis 5, wobei der Kernteil $LiNi_{0,6}Co_{0,2}Mn_{0,2}O_2$ umfasst und der Ummantelungsteil $LiNi_{1/3}Co_{1/3}Mn_{1/3}O_2$ umfasst.

7. Positives Aktivmaterial nach einem der Ansprüche 1 bis 6, wobei ein Nickelgehalt in dem Ummantelungsteil in einem Bereich von 33 bis 49 Mol-% bezüglich der Summe aus Ni, Co und Mn liegt.

8. Positives Aktivmaterial nach einem der Ansprüche 1 bis 7, wobei der Kernteil und der Ummantelungsteil im Wesentlichen kugelförmig sind.

9. Verfahren zur Herstellung eines positiven Aktivmaterials für eine Lithiumsekundärbatterie, wobei das Verfahren umfasst:

einen ersten Prozess zum Mischen einer ersten Vorläuferlösung, umfassend ein Nickelsalz, ein Kobaltsalz und ein Mangansalz in einem molaren Verhältnis von x:y:z, das $0,05≤x≤0,9$, $0,1≤y≤0,8$, $0,1≤z≤0,8$ erfüllt, und einer ersten Base, um eine erste Mischung herzustellen, und Einleiten einer Reaktion in der ersten Mischung, um ein Präzipitat zu gewinnen;

einen zweiten Prozess zum Versetzen des Präzipitates mit einer zweiten Vorläuferlösung, umfassend ein Nickelsalz, ein Kobaltsalz und ein Mangansalz in einem molaren Verhältnis von x':y':z', das $0,05≤x'≤0,9$, $0,1≤y'≤0,8$, $0,1≤z'≤0,8$ und $x'+y'+z'=1$ erfüllt, und einer zweiten Base, um eine zweite Mischung zu gewinnen, und Einleiten einer Reaktion in der zweiten Mischung, um ein Komposithydroxid auf Nickelbasis zu gewinnen; und

Mischen des Kompositmetallhydroxides mit einem Lithiumsalz und Wärmebehandeln des gemischten Kompositmetallhydroxides, um das positive Aktivmaterial nach einem der Ansprüche 1 bis 8 herzustellen,

wobei der Nickelgehalt in der ersten Vorläuferlösung so eingestellt wird, dass er größer als der Gehalt der zweiten Vorläuferlösung ist,

wobei die Reaktionszeit der zweiten Mischung in dem zweiten Prozess so eingestellt wird, dass sie länger als die Reaktionszeit der ersten Mischung in dem ersten Prozess ist, und
wobei ein pH-Wert der ersten Mischung in dem ersten Prozess so eingestellt wird, dass er in einem Bereich von 10 bis 11 liegt, und ein pH-Wert der zweiten Mischung in dem zweiten Prozess so eingestellt wird, dass er in einem Bereich von 11,5 bis 12,0 liegt.

10. Verfahren nach Anspruch 9, wobei eine Reaktionszeit der ersten Mischung in dem ersten Prozess in einem Bereich von 5 bis 7 Stunden liegt und eine Reaktionszeit der zweiten Mischung in dem zweiten Prozess in einem Bereich von 8 bis 10 Stunden liegt.

11. Verfahren nach einem der Ansprüche 9 bis 10, wobei eine Menge des Nickelsalzes in dem ersten Prozess in einem Bereich von 1 bis 1,2 Mol, auf der Grundlage von 1 Mol des Kobaltsalzes, liegt.

12. Lithiumsekundärbatterie (30), umfassend eine positive Elektrode (23), eine negative Elektrode (22), einen Separator (24) und einen Elektrolyten, wobei die positive Elektrode (23) das positive Aktivmaterial nach einem der Ansprüche 1 bis 8 umfasst.

13. Positiver Aktivmaterialvorläufer für das positive Aktivmaterial nach einem der Ansprüche 1 bis 8, wobei der positive Aktivmaterialvorläufer umfasst:
ein Komposithydroxid auf Nickelbasis, dargestellt durch die unten stehende Formel (2):

$$Ni_xCo_yMn_z(OH)_2 \qquad (2)$$

wobei $0{,}05 \leq x \leq 0{,}9$, $0{,}1 \leq y \leq 0{,}8$, $0{,}1 \leq z \leq 0{,}8$ und x+y+z=1, vorzugsweise $Ni_{0,6}Co_{0,2}Mn_{0,2}(OH)_2$ oder $Ni_{1/3}Co_{1/3}Mn_{1/3}(OH)_2$.

**Revendications**

1. Matériau actif positif pour une batterie rechargeable au lithium, le matériau actif positif comprenant :
une partie de cœur et une partie de gaine qui comprennent toutes deux un oxyde composite à base de nickel représenté par la formule (1) ci-dessous :

$$Li_a[Ni_xCo_yMn_z]O_2 \qquad (1)$$

dans laquelle $0{,}8 \leq a \leq 1{,}2$, $0{,}05 \leq x \leq 0{,}9$, $0{,}1 \leq y \leq 0{,}8$, $0{,}1 \leq z \leq 0{,}8$, et x+y+z = 1,
dans lequel la teneur en nickel de la partie de cœur est supérieure à la teneur en nickel de la partie de gaine, dans lequel la teneur en nickel de la partie de cœur est située dans la plage allant de 60 à 80 % en moles par rapport à la somme de Ni, Co et Mn, et la teneur en nickel de la partie de gaine est située dans la plage allant de 33 à 55 % en moles par rapport à la somme de Ni, Co et Mn, et la partie de cœur comprend des particules sensiblement aciculaires, où le diamètre de la partie de cœur est situé dans la plage allant de 1 à 10 $\mu$m, et **caractérisé en ce que** le diamètre de la partie de gaine est situé dans la plage allant de 5 à 20 $\mu$m.

2. Matériau actif positif selon la revendication 1, dans lequel la partie de cœur a une structure poreuse avec des pores ouverts.

3. Matériau actif positif selon la revendication 2, dans lequel la partie de gaine passe par perméation dans les pores ouverts de la partie de cœur.

4. Matériau actif positif selon l'une quelconque des revendications 1 à 3, dans lequel la partie de cœur a une structure de surface incurvée.

5. Matériau actif positif selon l'une quelconque des revendications 1 à 4, dans lequel la quantité de la partie de cœur est située dans la plage allant de 40 à 90 parties en poids, pour 100 parties en poids du matériau actif positif, et la quantité de la partie de gaine est située dans la plage allant de 10 à 60 parties en poids pour 100 parties en poids du matériau actif positif.

6. Matériau actif positif selon l'une quelconque des revendications 1 à 5, dans lequel la partie de cœur comprend du $LiNi_{0,6}Co_{0,2}Mn_{0,2}O_2$, et la partie de gaine comprend du $LiNi_{1/3}Co_{1/3}Mn_{1/3}O_2$.

7. Matériau actif positif selon l'une quelconque des revendications 1 à 6, dans lequel la teneur en nickel de la partie de gaine est située dans la plage allant de 33 à 49 % en moles par rapport à la somme de Ni, Co et Mn.

8. Matériau actif positif selon l'une quelconque des revendications 1 à 7, dans lequel la partie de cœur et la partie de gaine sont sensiblement sphériques.

9. Procédé de préparation d'un matériau actif positif pour une batterie rechargeable au lithium, le procédé comprenant :

un premier traitement pour mélanger une première solution de précurseur comprenant un sel de nickel, un sel de cobalt, et un sel de manganèse, en un rapport molaire x:y:z satisfaisant à $0{,}05 \leq x \leq 0{,}9$, $0{,}1 \leq y \leq 0{,}8$, $0{,}1 \leq z \leq 0{,}8$, et une première base, pour préparer un premier mélange, et induire une réaction dans le premier mélange pour obtenir un précipité ;
un deuxième traitement pour ajouter au précipité une deuxième solution de précurseur comprenant un sel de nickel, un sel de cobalt, et un sel de manganèse, en un rapport molaire x':y':z' satisfaisant à $0{,}05 \leq x' \leq 0{,}9$, $0{,}1 \leq y' \leq 0{,}8$, $0{,}1 \leq z' \leq 0{,}8$, et x'+y'+z' = 1, et une deuxième base, pour obtenir un deuxième mélange, et induire une réaction dans le deuxième mélange pour obtenir un hydroxyde composite à base de nickel ; et
le mélange de l'hydroxyde métallique composite avec un sel de lithium et le traitement à la chaleur de l'hydroxyde métallique composite mélangé pour préparer le matériau actif positif de l'une quelconque des revendications 1 à 8,
dans lequel la teneur en nickel de la première solution de précurseur est ajustée pour être supérieure à la teneur de la deuxième solution de précurseur,

dans lequel le temps de réaction du deuxième mélange dans le deuxième traitement est ajusté pour être plus long que le temps de réaction du premier mélange dans le premier traitement, et

dans lequel le pH du premier mélange dans le premier traitement est ajusté pour être situé dans la plage allant de 10 à 11, et le pH du deuxième mélange dans le deuxième traitement est ajusté pour être situé dans la plage allant de 11,5 à 12,0.

10. Procédé selon la revendication 9, dans lequel le temps de réaction du premier mélange dans le premier traitement est situé dans la plage allant de 5 à 7 heures, et le temps de réaction du deuxième mélange dans le deuxième traitement est situé dans la plage allant de 8 à 10 heures.

11. Procédé selon l'une quelconque des revendications 9 et 10, dans lequel la quantité du sel de nickel dans le premier traitement est située dans la plage allant de 1 à 1,2 moles par mole du sel de cobalt.

12. Batterie rechargeable au lithium (30) comprenant une électrode positive (23), une électrode négative (22), un séparateur (24) et un électrolyte, dans laquelle l'électrode positive (23) comprend le matériau actif positif de l'une quelconque des revendications 1 à 8.

13. Précurseur de matériau actif positif pour le matériau actif positif de l'une quelconque des revendications 1 à 8, le précurseur de matériau actif positif comprenant :

un hydroxyde composite à base de nickel représenté par la formule (2) ci-dessous

$$Ni_xCo_yMn_z(OH)_2 \qquad (2)$$

dans laquelle $0,05 \leq x \leq 0,9$, $0,1 \leq y \leq 0,8$, $0,1 \leq z \leq 0,8$, et $x+y+z = 1$, de préférence $Ni_{0,6}Co_{0,2}Mn_{0,2}(OH)_2$ ou $Ni_{1/3}Co_{1/3}Mn_{1/3}(OH)_2$.

FIG. 1

FIG. 2

FIG. 3

FIG. 4

FIG. 5

FIG. 6

# FIG. 7

| Mix nickel salt, cobalt salt, and manganese salt to obtain first precursor solution. | ~ 110 |

↓

| Add first base to first precursor solution to obtain first mixture. | ~ 120 |

↓

| Induce first coprecipitation reaction in first mixture to obtain precipitate. | ~ 130 |

↓

| Mix nickel salt, cobalt salt, and manganese salt to obtain second precursor solution. | ~ 140 |

↓

| Add second precursor solution and second base to precipitate to obtain second mixture. | ~ 150 |

↓

| Induce second coprecipitation reaction in second mixture to obtain nickel-based composite hydroxide of formula (2). | ~ 160 |

↓

| Mix composite metal hydroxide with lithium salt and heat treat resultant mixture to obtain positive active material of formula (1). | ~ 170 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   US 2012270107 A

**Non-patent literature cited in the description**

•   **YANG-KOOK SUN et al.** *Nature Materials,* 22 March 2009, vol. 8 (4), 320-324
•   **YANG-KOOK SUN et al.** *Advanced Functional Materials,* 08 February 2010, vol. 20 (3), 485-491
•   **M-H LEE et al.** *Electrochimica Acta,* January 2004, vol. 50, 939-948